# EUROPEAN PATENT APPLICATION

(11) **EP 4 717 530 A1**
(43) Date of publication of application: **01.04.2026**
(21) Application number: 24203263.9
(22) Date of filing: 27.09.2024
(51) Int. Cl.: B60R 21/213, B60R 21/232

(54) **CURTAIN AIRBAG SYSTEM, ASSOCIATED VEHICLE AND METHOD**

(71) Applicant: VOLVO TRUCK CORPORATION, 405 08 Göteborg (SE)
(72) Inventor: SOHAL, Satbir, 410210 NAVI MUMBAI (IN)
(74) Representative: Lavoix

(57) **Abstract**

The invention relates to a curtain airbag system (11) comprising a curtain airbag (17) and an airbag support (19).

The curtain airbag (17) is configured to be inflated between a folded configuration, in which it does not cover a door arrangement (7), and a deployed configuration, in which it covers at least partially the door arrangement (7). It comprises a first airbag portion, configured to cover at least partially the door arrangement (7) when the curtain airbag (17) is in the deployed configuration, and a second airbag portion, configured to cover a display screen (9) when the curtain airbag (17) is in the deployed configuration.

The airbag support (19) is configured to store the curtain airbag (17) when in the folded configuration.

## Description

### TECHNICAL FIELD

The disclosure relates generally to vehicle airbag systems. In particular aspects, the disclosure relates to a curtain airbag system and associated vehicle and method. The disclosure can be applied to heavy-duty vehicles, such as vehicles, buses, and construction equipment, among other vehicle types. Although the disclosure may be described with respect to a particular vehicle, the disclosure is not restricted to any particular vehicle.

### BACKGROUND

Airbag systems are key security devices that are used to safeguard a driver or a passenger during a rollover or a crash event. In particular, curtain airbag systems are used to prevent injuries due to the collision between a driver or passenger and the door arrangement of the vehicle. Despite the plurality of existing airbag system designs, there is always a need to improve the efficiency of such systems to increases the safety of the vehicle.

In particular, some trucks have a front pillar, also called A-pillar, which is inclined and mounted with a display screen. Inclined A-pillar limits the implementation of adding a guide rod for the airbag tether support in the front region to support the curtain airbag deployment. The display screen also adds a potential injury risk for the driver or passenger during a rollover crash event.

### SUMMARY

According to a first aspect of the disclosure, the invention concerns a curtain airbag system for a vehicle, the vehicle comprising a front pillar, a back pillar, a door arrangement located between the front pillar and the back pillar and a display screen located on the front pillar, the curtain airbag system comprising :
- a curtain airbag, configured to be inflated between a folded configuration, in which the curtain airbag does not cover the door arrangement, and a deployed configuration, in which the curtain airbag covers at least partially the door arrangement; and
- an airbag support, configured to store the curtain airbag when the curtain airbag is in the folded configuration;
wherein the curtain airbag comprises a first airbag portion, configured to cover at least partially the door arrangement when the curtain airbag is in the deployed configuration, and a second airbag portion, configured to cover the display screen when the curtain airbag is in the deployed configuration.

The first aspect of the disclosure may seek to improve the efficiency of the curtain airbag system for trucks with an inclined A-pillar mounted with a display screen. A technical benefit may include the protection of a driver or passenger of any size and seating position, from the door arrangement and from the display screen, during a rollover crash event.

Optionally in some examples, including in at least one preferred example, the door arrangement comprises a body-in-white part and an additional part and the airbag support is attached to the body-in-white part.

A technical benefit may include a reliable fixation of the airbag support to the door arrangement.

Optionally in some examples, including in at least one preferred example, the first airbag portion isolates a person seating in the vehicle from the door arrangement when the curtain airbag is in the deployed configuration.

A technical benefit may include an improvement of the protection provided by the curtain airbag system.

Optionally in some examples, including in at least one preferred example, the second airbag portion isolates a person seating in the vehicle from the display screen when the curtain airbag is in the deployed configuration.

A technical benefit may include an improvement of the protection provided by the curtain airbag system.

Optionally in some examples, including in at least one preferred example, the airbag support comprises a guide rod, the guide rod being mounted at the back pillar, the curtain airbag being attached to the guide rod and mobile along the guide rod.

A technical benefit may include a more reliable deployment of the curtain airbag.

Optionally in some examples, including in at least one preferred example, the airbag support further comprises a main bracket, the main bracket comprising :
- an attachment portion, configured to be attached to the door arrangement; and
- a flat portion, substantially perpendicular to the attachment portion, configured to provide a reaction force to the curtain airbag when the curtain airbag deploys from the folded configuration to the deployed configuration.

A technical benefit may include reliable fixation of the curtain airbag system to the rest of the vehicle and an increase in the robustness of the curtain airbag system.

Optionally in some examples, including in at least one preferred example, the main bracket is made of metal.

A technical benefit may include appropriate mechanical properties of the main bracket to provide reaction force to the deploying curtain airbag.

Optionally in some examples, including in at least one preferred example, the airbag support further comprises at least one side bracket functionally connected to the main bracket, configured to receive at least partly a direct impact of the curtain airbag when the curtain airbag deploys from the folded configuration to the deployed configuration and to direct the curtain airbag downwardly when the curtain airbag deploys from the folded configuration to the deployed configuration.

A technical benefit may include the prevention of physical damages on the trims and the correct deployment of the curtain airbag downwardly.

Optionally in some examples, including in at least one preferred example, the at least one side bracket is a metal sheet comprising a large portion and a short portion, the short portion being substantially perpendicular to the large portion, the metal sheet thus having a substantially L-shaped cross-section.

A technical benefit may include the correct deployment of the curtain airbag downwardly.

Optionally in some examples, including in at least one preferred example, the main bracket comprises a side flange, substantially perpendicular to the attachment portion and opposed to the attachment portion with respect to the flat portion.

A technical benefit may include an interface for fixing other parts to the main brackets.

Optionally in some examples, including in at least one preferred example :
a. the side flange comprises at least one primary hole ;
b. the at least one side bracket comprises at least one secondary hole ;
c. the airbag support comprises a connecting element, cooperating with the at least one primary hole and the at least one secondary hole; and
d. the at least one side bracket is attached to the main bracket by means of the connecting element.

A technical benefit may include a reliable fixation of the main bracket with the side brackets.

Optionally in some examples, including in at least one preferred example, the side flange of the main bracket is configured to provide a reaction force to direct the curtain airbag downwardly under the direct impact of the curtain airbag when the curtain airbag deploys from the folded configuration to the deployed configuration.

A technical benefit may include the prevention of damages on the trims, which can be dangerous for the people inside the truck.

Optionally in some examples, including in at least one preferred example, the curtain airbag is contained within a volume defined by the main bracket and the at least one side bracket when in the folded configuration.

A technical benefit may include the compactness of the curtain airbag system when in the folded configuration.

Optionally in some examples, including in at least one preferred example, the airbag support comprises at least two side brackets.

A technical benefit may include a multiplication of the benefits offered by the side bracket.

Optionally in some examples, including in at least one preferred example, the airbag support comprises three side brackets, each side bracket of the three side brackets being configured to receive at least partly a direct impact of the curtain airbag and to direct the curtain airbag downwardly when the curtain airbag deploys from the folded configuration to the deployed configuration.

A technical benefit may include a multiplication of the benefits offered by the side bracket.

According to a second aspect of the disclosure, the invention concerns a vehicle comprising a front pillar, a back pillar, a door arrangement located between the front pillar and the back pillar, a display screen located on the front pillar and the curtain airbag system in accordance with the above.

A technical benefit may include that the vehicle is safer in use, as compared to existing vehicles.

According to a third aspect of the disclosure, the invention concerns a method for protecting passengers of such a vehicle, the method comprising the following steps:
- a detection step, wherein a vehicle crash event is detected while the curtain airbag is in the folded configuration ; and
- a deployment step, wherein the curtain airbag is being inflated from its folded configuration to its deployed configuration.

A technical benefit may include improving the protection of a driver or a passenger of the vehicle during a rollover crash event.

Optionally in some examples, including in at least one preferred example, the deployment step comprises :
- a first deployment sub-step, wherein the first airbag portion is being inflated from the folded configuration to a deployed configuration where it covers the door arrangement, the first airbag portion being fully inflated at the end of the second deployment sub-step ; and
- a second deployment sub-step, wherein the second airbag portion is being inflated from a folded configuration to a deployed configuration where it covers the display screen, the curtain airbag being in the deployed configuration at the end of the second deployment sub-step.

A technical benefit may include an improvement of the correct positioning of the deployed airbag.

Optionally in some examples, including in at least one preferred example, the first deployment sub-step comprises :
- the first airbag portion being inflated from the folded configuration to an intermediate configuration, the main bracket providing a reaction force to the curtain airbag, leading to a limited bending of the side flange of the main bracket; and
- the first airbag portion being inflated from the intermediate configuration to the deployed configuration where it covers the door arrangement, the main bracket providing a reaction force to the curtain airbag and the curtain airbag being directed downwardly by the at least one side bracket.

A technical benefit may include an improvement of the correct positioning of the deployed airbag and a prevention of damages to the trims.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** shows an exemplary curtain airbag system in a folded configuration according to the invention.
**FIG. 2** shows the curtain airbag system of fig. 1 where a first airbag portion is in a deployed configuration and a second airbag portion is in a folded configuration (insert A) and where both airbag portions are in the deployed configuration (insert B).
**FIG. 3** shows an exemplary main bracket of the curtain airbag system of fig. 1, viewed from two different angles, respectively on inserts A) and B).
**FIG. 4** shows an exemplary side bracket of the curtain airbag system of fig. 1.
**FIG. 5** shows an exemplary assembly of the main bracket of fig.2 and three side brackets of fig.4.

### DETAILED DESCRIPTION

The detailed description set forth below provides information and examples of the disclosed technology with sufficient detail to enable those skilled in the art to practice the disclosure.

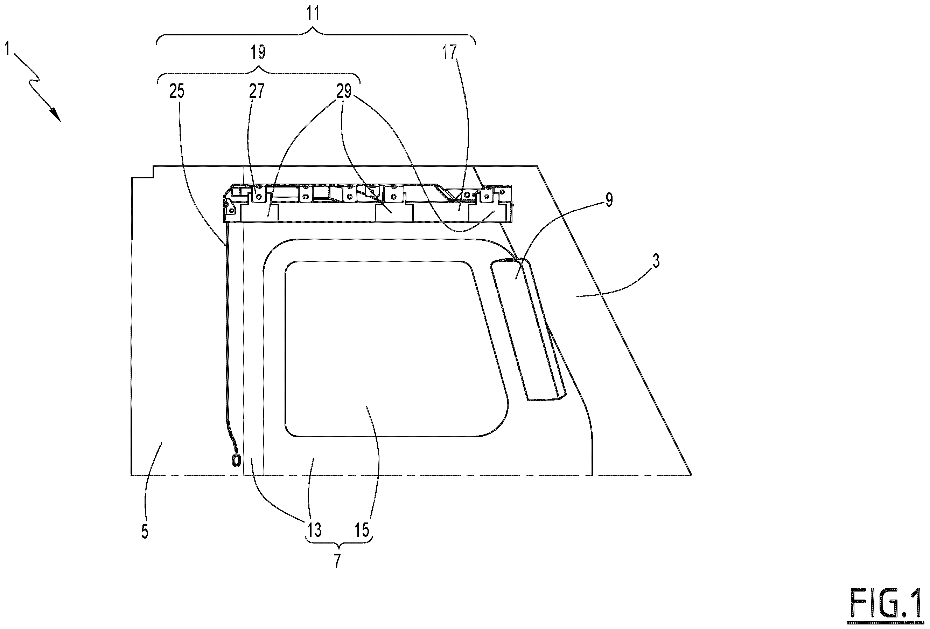

Figure 1 shows a part of a vehicle 1, comprising a front pillar 3, a back pillar 5, a door arrangement 7, a display screen 9 and a curtain airbag system 11.

The front pillar, also called A-pillar, is inclined compared the back pillar 5, also called B-pillar, which is perpendicular to a ceiling and a floor of the vehicle 1.

The door arrangement 7 is located between the front pillar 3 and the back pillar 5 and comprises a body-in-white part 13 and an additional part 15. The body-in-white part 13 belongs to a body-in-white of the vehicle 1. The additional part 15 comprises for example trims and a window.

The display screen 9 is mounted on the front pillar 3. The display screen 9 is for example a content management system display screen, configured to display a plurality of information to a driver or passenger of the vehicle 1.

The curtain airbag system 11 comprises a curtain airbag 17 and an airbag support 19. The role of the curtain airbag system 11 is to safeguard a driver or a passenger of the vehicle 1, of any size and seating position, from the door arrangement 7 and the display screen 9 during a rollover crash event of the vehicle 1.

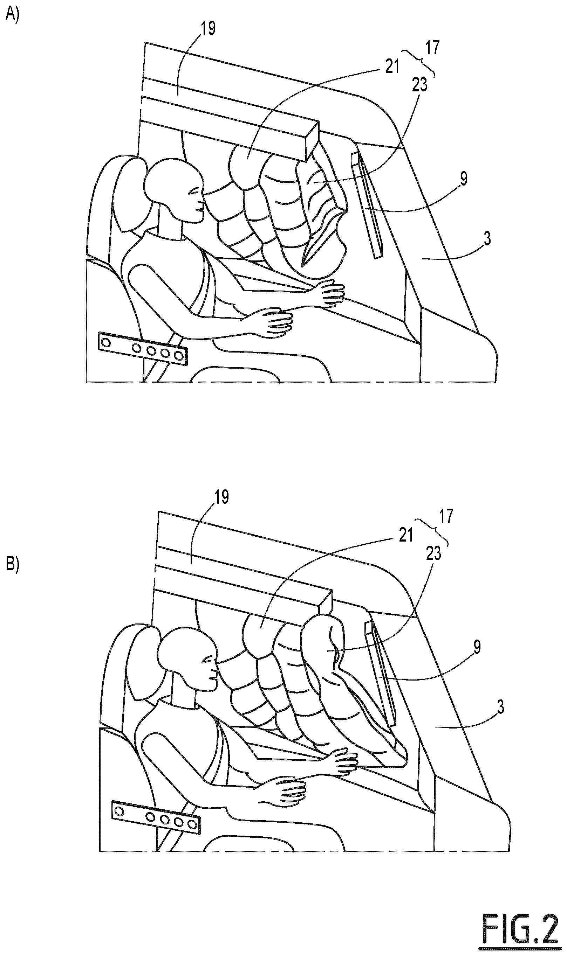

The curtain airbag 17 is visible on both inserts A and B of figure 2. The curtain airbag 17 is for example made of a soft inflatable material, for example fabric, and comprises a first airbag portion 21 and a second airbag portion 23. The curtain airbag 17 is inflatable between a folded configuration and a deployed configuration.

In the folded configuration, the curtain airbag 17 is not inflated. In other word, it is empty of air. In this configuration, the curtain airbag 17 does not cover the door arrangement 7. This configuration is illustrated on figure 1.

In the deployed configuration, both the first airbag portion 21 and the second airbag portion 23 of the curtain airbag 17 are inflated. In this configuration, the first airbag portion 21 covers at least partially the door arrangement 7 and isolates a person seating in the vehicle 1 from the door arrangement 7. The second airbag portion 23 covers the display screen 9 and isolates a person seating in the vehicle 1 from the display screen 9. This configuration is illustrated on the insert B of figure 2.

Advantageously, the first airbag portion 21 and the second airbag portion 23 can be inflated sequentially from the first airbag portion 21 towards the second airbag portion 23. Therefore, the first airbag portion 21 can be in a deployed configuration where it covers the door arrangement 7, while the second airbag portion 23 is still in unfolding progress. This configuration is illustrated on the insert A of figure 2.

According to another embodiment of the invention, the first airbag portion 21 and the second airbag portion 23 deploy simultaneously.

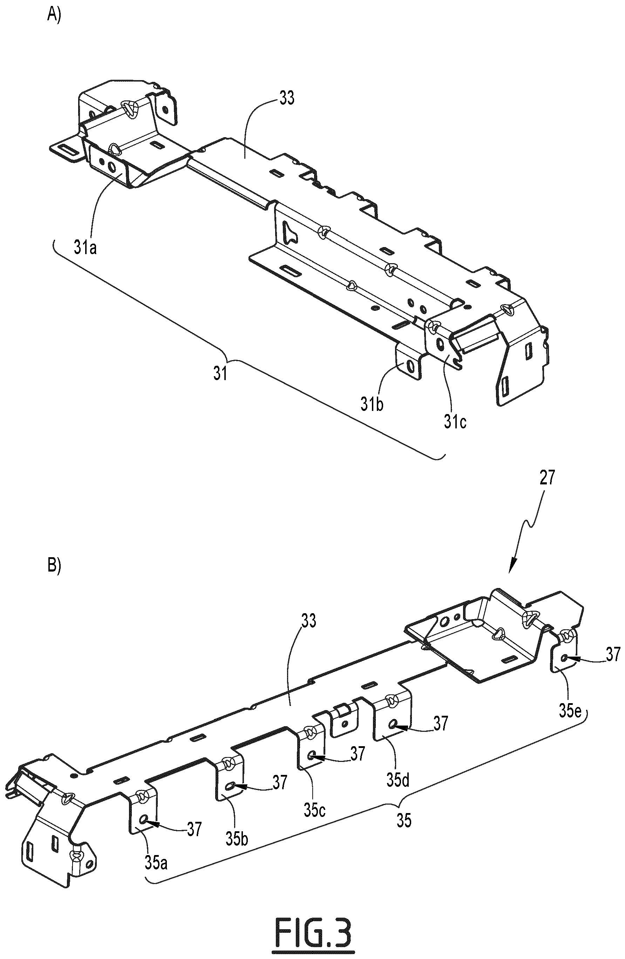

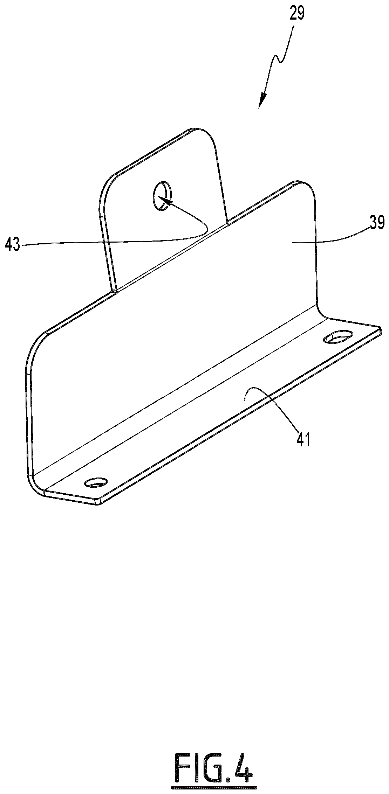

The role of the airbag support 19 is to store the curtain airbag 17 when in the folded position, as shown figure 1, and to provide a reaction force to the curtain airbag 17 and to direct it downwardly when the curtain airbag 17 is being inflated from its folded configuration to its deployed configuration. The airbag support 19 advantageously comprises at least one guide rod 25 and a main bracket 27 represented alone on figure 3 and at least one side bracket 29 represented alone on figure 4, at a larger scale.

As shown figure 1, the guide rod 25 is mounted on the back pillar 5. The guide rod 25 is configured to guide by itself the deployment of the curtain airbag 17. Indeed, since the front pillar 3 is inclined and mounted with a display screen 9, another guide rod cannot be easily mounted on the front pillar 3. Thus, the curtain airbag 17 is attached to the guide rod 25 and mobile along the guide rod 25.

In the preferred embodiment on the invention, represented on figure 1, the guide rod 25 is a single guide rod 25. A technical effect may include an easier integration of the curtain airbag system in a vehicle having an inclined front pillar.

In another non-represented embodiment of the invention, the airbag support 19 comprises several guide rods 25. For example, a first guide rod 25 is mounted on the A-pillar and a second guide rod 25 is mounted on the B-pillar.

The main bracket 27 is represented in more details on figure 3, whose inserts A and B show two different points of view of the main bracket 27. The main bracket 27 comprises an attachment portion 31, a flat portion 33 and a side flange 35. The main bracket 27 is advantageously made of metal.

The attachment portion 31 is attached to the body-in-white part 13 of the door arrangement 7. In other words, it is through the attachment portion 31 that the main bracket 27 is fixed to the vehicle 1. To this purpose, the attachment portion 31 complements at least partially a shape of the body-in-white part 13. The fixation of the attachment portion 31 to the body-in-white part 13 is for example made by means of non-represented screws.

The flat portion 33 is substantially perpendicular to the attachment portion 31. By "substantially", it is meant that a difference of about 10° is tolerated compared to a perpendicular direction. The flat portion 33 is configured to provide a reaction force to the curtain airbag 17 when the curtain airbag 17 deploys from the folded configuration to the deployed configuration.

In the example illustrated on figure 3, the attachment portion 31 comprises three attachment portions 31a, 31b, 31c that are separated from each other. Alternatively, the attachment portion 31 comprises more or less than three separated parts 31a-c based on at least one property of the curtain airbag 17 (size, profile, configuration) and mounting configuration in the vehicle 1.

The side flange 35 is substantially perpendicular to the attachment portion 31 and opposed to the attachment portion 31 with respect to the flat portion 33. In other words, the side flange 35 is oriented towards the inside of the vehicle 1. The role of the side flange 35 is to provide an interface to fix the at least one side bracket 29 to the main bracket 27. Additionally, the side flange 35 provides a reaction force to direct the curtain airbag 17 downwardly under the direct impact of the curtain airbag 17 when the curtain airbag 17 deploys from the folded configuration to the deployed configuration. To this purpose, the side flange 35 comprises at least one primary hole 37.

In the example illustrated on figure 3, the side flange 35 comprises five separated parts 35a, 35b, 35c, 35d, 35e, each of them comprising one primary hole 37. In this example, the number of primary holes 37 is greater than the number of side brackets 29, which allows choosing the positions of the side brackets 29 among different possible positions along the main bracket 2, while mounting the airbag support 19. Alternatively, the side flange 35 comprises more or less than five separated parts 35a-e.

One side bracket 29 is represented on figure 4. The role of the side bracket 29 is to receive at least partly a direct impact of the curtain airbag 17 and to direct the curtain airbag 17 downwardly when the curtain airbag 17 deploys from the folded configuration to the deployed configuration. By receiving the direct impact of the curtain airbag 17, the side bracket 29 prevents damages on a housing of the curtain airbag system 11 and of other parts of the vehicle 1, such as the door arrangement 7. The housing of the curtain airbag system 11 is for example made of plastic trims, which would not resist the direct impact of the curtain airbag 17.

To this purpose, the side bracket 29 is a metal sheet comprising a large portion 39 and a short portion 41. The short portion 41 is substantially perpendicular to the large portion 39, the sheet thus having a substantially L-shaped cross-section. The large portion 39 of each side bracket 29 comprises a secondary hole 43, thanks to which the side bracket 29 can be attached to the main bracket 27.

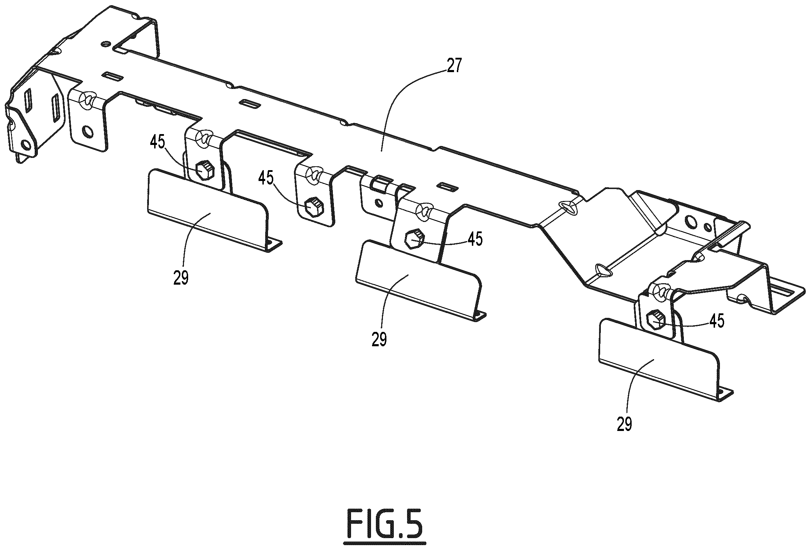

An assembly of the main bracket and three side brackets 29 is shown figure 5. Each side bracket 29 is fixed to the main bracket 27 by means of a connecting element 45, configured to cooperate with one primary hole 37 and one secondary hole 43.

Advantageously, all primary holes 37 are similar, all secondary holes 43 are similar and all connecting elements 45 are similar, so that the connecting elements 45 are interchangeable.

As an alternative, there are different versions of primary holes 37, of secondary holes 43 and of connecting elements 45.

The connecting elements 45 are for example screws.

Advantageously, the above-described assembly made of parts 27 and 29 fully shelters the curtain airbag 17 when in the folded configuration, as visible on figure 1. In other words, the curtain airbag 17 is contained within a volume defined by the main bracket 27 and the side brackets 29 when in the folded configuration.

A method for protecting passengers of the vehicle 1 using the curtain airbag system 11 is described next. The method comprises a detection step and a deployment step.

The detection step consists in the detection of a crash event of the vehicle 1 by an embedded device of the vehicle 1. The detection step occurs while the curtain airbag 17 is in the folded configuration, as on figure 1.

Then, during the deployment step, the curtain airbag 17 is being inflated from its folded configuration to its deployed configuration while being guided by the guide rod 25. The deployment step advantageously comprises a first deployment sub-step and a second deployment sub-step.

During the first deployment sub-step, the first airbag portion 21 is advantageously being inflated from the folded configuration to an intermediate configuration, where the first airbag portion 21 is partially inflated, the main bracket 27 providing a reaction force to the curtain airbag 17. This reaction force leads to a limited bending of the side flange 35 of the main bracket 27, as shown on figure 5. As one can see on figure 5, the bending is at its highest around the middle of the main bracket 27, where the impact from the deploying curtain airbag 17 is at its highest. Later during the first deployment sub-step, the first airbag portion 21 is inflated from the intermediate configuration to the deployed configuration where it covers the door arrangement 7, the main bracket 27 still providing a reaction force to the curtain airbag 17 and the curtain airbag 17 being directed downwardly by the side brackets 29. In other words, the direction of deployment is corrected by the side brackets 29 after the curtain airbag 17 reached its intermediate position. During the whole first deployment sub-step, the first airbag portion 21 is inflated independently from the second airbag portion 23. Therefore, at the end of the first deployment sub-step, the first airbag portion 21 is in its deployed configuration, while the second airbag portion 23 is still in its folded configuration, as illustrated on the insert A of figure 2.

During the second deployment sub-step, the second airbag portion 23 is inflated from a folded configuration to a deployed configuration where it covers the display screen 9. At the end of the second deployment sub-step, the curtain airbag 17 is in the deployed configuration, as illustrated on the insert B of figure 2.

Alternatively, both the first airbag portion 21 and the second airbag portion 23 are inflated simultaneously during the deployment step.

At the end of the deployment step, the curtain airbag 1 safeguards a driver or passenger of the vehicle 1 of any size and seating position from the door arrangement 7 and from the display screen 9.

**Example 1:** a curtain airbag system 11 for a vehicle 1, the vehicle 1 comprising a front pillar 3, a back pillar 5, a door arrangement 7 located between the front pillar 3 and the back pillar 5 and a display screen 9 located on the front pillar 3, the curtain airbag system 11 comprising :
- a curtain airbag 17, configured to be inflated between a folded configuration, in which the curtain airbag 17 does not cover the door arrangement 7, and a deployed configuration, in which the curtain airbag 17 covers at least partially the door arrangement 7; and
- an airbag support 19, configured to store the curtain airbag 17 when the curtain airbag 17 is in the folded configuration;
wherein the curtain airbag 17 comprises a first airbag portion 21, configured to cover at least partially the door arrangement 7 when the curtain airbag 17 is in the deployed configuration, and a second airbag portion 23, configured to cover the display screen 9 when the curtain airbag 17 is in the deployed configuration.

**Example 2:** The curtain airbag system 11 of example 1, wherein the door arrangement 7 comprises a body-in-white part 13 and an additional part 15 and wherein the airbag support 19 is attached to the body-in-white part 13.

**Example 3:** The curtain airbag system 11 of example 1, wherein the first airbag portion 21 isolates a person seating in the vehicle 1 from the door arrangement 7 when the curtain airbag 17 is in the deployed configuration.

**Example 4:** The curtain airbag system 11 of example 1, wherein the second airbag portion 23 isolates a person seating in the vehicle 1 from the display screen 9 when the curtain airbag 17 is in the deployed configuration.

**Example 5:** The curtain airbag system 11 of example 1, wherein the airbag support 19 comprises a guide rod 25, the guide rod 25 being mounted at the back pillar 5, the curtain airbag 17 being attached to the guide rod 25 and mobile along the guide rod 25.

**Example 6:** the curtain airbag system 11 of example 1, wherein the airbag support 19 further comprises a main bracket 27, the main bracket 27 comprising :
- an attachment portion 31, configured to be attached to the body-in-white part 13 of the door arrangement 7; and
- a flat portion 33, substantially perpendicular to the attachment portion 31, configured to provide a reaction force to the curtain airbag 17 when the curtain airbag 17 deploys from the folded configuration to the deployed configuration.

**Example** 7: The curtain airbag system 11 of example 6, wherein the main bracket 27 is made of metal.

**Example 8:** The curtain airbag system 11 of example 6, wherein the airbag support 19 further comprises at least one side bracket 29, attached to main bracket 27 and configured to receive at least partly a direct impact of the curtain airbag 17 when the curtain airbag 17 deploys from the folded configuration to the deployed configuration and to direct the curtain airbag 17 downwardly when the curtain airbag 17 deploys from the folded configuration to the deployed configuration.

**Example 9:** The curtain airbag system 11 of example 8, wherein the at least one side bracket 29 is a sheet comprising a large portion 39 and a short portion 41, the short portion 41 being substantially perpendicular to the large portion 39, the sheet thus having a substantially L-shaped cross-section.

**Example 10:** curtain airbag system 11 of example 6, wherein the main bracket 27 comprises a side flange 35, substantially perpendicular to the attachment portion 31 and opposed to the attachment portion 31 with respect to the flat portion 33.

**Example 11:** The curtain airbag system 11 of examples 8 and 10, wherein :
- the side flange 35 comprises at least one primary hole ;
- the at least one side bracket 29 comprises at least one secondary hole 43;
- the airbag support 19 comprises a connecting element 45, cooperating with the at least one primary hole 37 and the at least one secondary hole 43; and
- the at least one side bracket 29 is attached to the main bracket 27 by means of the connecting element 45.

**Example 12:** The curtain airbag system 11 of example 10, wherein the side flange 35 of the main bracket 27 is configured to provide a reaction force to direct the curtain airbag 17 downwardly under the direct impact of the curtain airbag 17 when the curtain airbag 17 deploys from the folded configuration to the deployed configuration.

**Example 13:** The curtain airbag system 11 of examples 6 and 8, wherein the curtain airbag 17 is contained within a volume defined by the main bracket 27 and the at least one side bracket 29 when in the folded configuration.

**Example 14:** The curtain airbag system 11 of example 8, wherein the airbag support 19 comprises at least two side brackets 29.

**Example 15:** The curtain airbag system 11 of example 8, wherein the airbag support 19 comprises three side brackets 29, each side bracket 29 of the three side brackets 29 being configured to receive at least partly a direct impact of the curtain airbag 17 and to direct the curtain airbag 17 downwardly when the curtain airbag 17 deploys from the folded configuration to the deployed configuration.

**Example 16:** A vehicle 1 comprising a front pillar 3, a back pillar 5, a door arrangement 7 located between the front pillar 3 and the back pillar 5, a display screen 9 located on the front pillar 3 and the curtain airbag system 11 according to example 1.

**Example 17:** A method for protecting passengers of a vehicle 1 according to example 16, the method comprising the following steps:
- a detection step, wherein a vehicle crash event is detected while the curtain airbag 17 is in the folded configuration ; and
- a deployment step, wherein the curtain airbag 17 is being inflated from its folded configuration to its deployed configuration.

**Example 18:** The method of example 17, wherein the deployment step comprises:
- a first deployment sub-step, wherein the first airbag portion 21 is being inflated from the folded configuration to a deployed configuration where it covers the door arrangement 7, the first airbag portion 21 being fully inflated at the end of the second deployment sub-step ; and
- a second deployment sub-step, wherein the second airbag portion 23 is being inflated from a folded configuration to a deployed configuration where it covers the display screen, the curtain airbag 17 being in the deployed configuration at the end of the second deployment sub-step.

**Example 19:** The method of example 18, wherein the curtain airbag system 11 is according to examples 8 and 10 and the first deployment sub-step comprises :
- the first airbag portion 21 being inflated from the folded configuration to an intermediate configuration, the main bracket 27 providing a reaction force to the curtain airbag 17, leading to a limited bending of the side flange 35 of the main bracket 27 ; and
- the first airbag portion 21 being inflated from the intermediate configuration to the deployed configuration where it covers the door arrangement 7, the main bracket 27 providing a reaction force to the curtain airbag 17 and the curtain airbag 17 being directed downwardly by the at least one side bracket 29.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A curtain airbag system (11) for a vehicle (1), the vehicle (1) comprising a front pillar (3), a back pillar (5), a door arrangement (7) located between the front pillar (3) and the back pillar (5) and a display screen (9) located on the front pillar (3), the curtain airbag system (11) comprising :
- a curtain airbag (17), configured to be inflated between a folded configuration, in which the curtain airbag (17) does not cover the door arrangement (7), and a deployed configuration, in which the curtain airbag (17) covers at least partially the door arrangement (7); and
- an airbag support (19), configured to store the curtain airbag (17) when the curtain airbag (17) is in the folded configuration;
wherein the curtain airbag (17) comprises a first airbag portion (21), configured to cover at least partially the door arrangement (7) when the curtain airbag (17) is in the deployed configuration, and a second airbag portion (23), configured to cover the display screen (9) when the curtain airbag (17) is in the deployed configuration.

2. The curtain airbag system (11) of claim 1, wherein the door arrangement (7) comprises a body-in-white part (13) and an additional part (15) and wherein the airbag support (19) is attached to the body-in-white part (13).

3. The curtain airbag system (11) of claim 1, wherein the first airbag portion (21) isolates a person seating in the vehicle (1) from the door arrangement (7) when the curtain airbag (17) is in the deployed configuration.

4. The curtain airbag system (11) of claim 1, wherein the second airbag portion (23) isolates a person seating in the vehicle (1) from the display screen (9) when the curtain airbag (17) is in the deployed configuration.

5. The curtain airbag system (11) of claim 1, wherein the airbag support (19) comprises a guide rod (25), the guide rod (25) being mounted at the back pillar (5), the curtain airbag (17) being attached to the guide rod (25) and mobile along the guide rod (25).

6. The curtain airbag system (11) of claim 1, wherein the airbag support (19) further comprises a main bracket (27), the main bracket (27) comprising :
- an attachment portion (31), configured to be attached to the door arrangement (7); and
- a flat portion (33), substantially perpendicular to the attachment portion (31), configured to provide a reaction force to the curtain airbag (17) when the curtain airbag (17) deploys from the folded configuration to the deployed configuration.

7. The curtain airbag system (11) of claim 6, wherein the main bracket (27) is made of metal.

8. The curtain airbag system (11) of claim 6, wherein the airbag support (19) further comprises at least one side bracket (29) functionally connected to the main bracket (27), configured to receive at least partly a direct impact of the curtain airbag (17) and to direct the curtain airbag (17) downwardly when the curtain airbag (17) deploys from the folded configuration to the deployed configuration.

9. The curtain airbag system (11) of claim 8, wherein the at least one side bracket (29) is a metal sheet comprising a large portion (39) and a short portion (41), the short portion (41) being substantially perpendicular to the large portion (39), the metal sheet thus having a substantially L-shaped cross-section.

10. The curtain airbag system (11) of claim 6, wherein the main bracket (27) comprises a side flange (35), substantially perpendicular to the attachment portion (31) and opposed to the attachment portion (31) with respect to the flat portion (33).

11. The curtain airbag system of claim 8 and 10, wherein :
- the side flange (35) comprises at least one primary hole (37) ;
- the at least one side bracket (29) comprises at least one secondary hole (43) ;
- the airbag support (19) comprises a connecting element (45), cooperating with the at least one primary hole (37) and the at least one secondary hole (43); and
- the at least one side bracket (29) is attached to the main bracket (27) by means of the connecting element (45).

12. The curtain airbag system (11) of claim 10, wherein the side flange (35) of the main bracket (27) is configured to provide a reaction force to direct the curtain airbag (17) downwardly under the direct impact of the curtain airbag (17) when the curtain airbag (17) deploys from the folded configuration to the deployed configuration.

13. The curtain airbag system (11) of claims 6 and 8, wherein the curtain airbag (17) is contained within a volume defined by the main bracket (27) and the at least one side bracket (29) when in the folded configuration.

14. The curtain airbag system (11) of claim 8, wherein the airbag support (19) comprises at least two side brackets (29).

15. The curtain airbag system (11) of claim 8, wherein the airbag support (19) comprises three side brackets (29), each side bracket (29) of the three side brackets (29) being configured to receive at least partly a direct impact of the curtain airbag (17) and to direct the curtain airbag (17) downwardly when the curtain airbag (17) deploys from the folded configuration to the deployed configuration.

16. A vehicle (1) comprising a front pillar (3), a back pillar (5), a door arrangement (7) located between the front pillar (3) and the back pillar (5), a display screen (9) located on the front pillar (3) and the curtain airbag system (11) according to claim 1.

17. A method for protecting passengers of a vehicle (1) according to claim 16, the method comprising the following steps:
- a detection step, wherein a vehicle crash event is detected while the curtain airbag (17) is in the folded configuration ; and
- a deployment step, wherein the curtain airbag (17) is being inflated from its folded configuration to its deployed configuration.

18. The method of claim 17, wherein the deployment step comprises :
- a first deployment sub-step, wherein the first airbag portion (21) is being inflated from the folded configuration to a deployed configuration where it covers the door arrangement (7), the first airbag portion (21) being fully inflated at the end of the second deployment sub-step ; and
- a second deployment sub-step, wherein the second airbag portion (23) is being inflated from a folded configuration to a deployed configuration where it covers the display screen (9), the curtain airbag (17) being in the deployed configuration at the end of the second deployment sub-step.

19. The method of claim 18, wherein the curtain airbag system (11) is according to claim 8 and 10 and the first deployment sub-step comprises :
- the first airbag portion (21) being inflated from the folded configuration to an intermediate configuration, the main bracket (27) providing a reaction force to the curtain airbag (17), leading to a limited bending of the side flange (35) of the main bracket (27) ; and
- the first airbag portion (21) being inflated from the intermediate configuration to the deployed configuration where it covers the door arrangement (7), the main bracket (27) providing a reaction force to the curtain airbag (17) and the curtain airbag (17) being directed downwardly by the at least one side bracket (29).
